# EUROPEAN PATENT APPLICATION

(11) **EP 3 136 625 A1**
(43) Date of publication of application: **01.03.2017**
(21) Application number: 15783418.5
(22) Date of filing: 21.04.2015
(51) Int. Cl.: H04B 11/00, H04L 12/12

(54) **COMMUNICATION SETTING SYSTEM AND METHOD FOR IOT DEVICE USING MOBILE COMMUNICATION TERMINAL**

(30) Priority: 25.04.2014 KR 20140050122
(71) Applicant: Cresprit, Bundang-gu, Seongnam-si Gyeonggi-do 13557 (KR)
(72) Inventor: KWON, Jin Man, Yongin-si Gyeonggi-do 448-721 (KR)
(74) Representative: Glawe, Delfs, Moll
(86) International application number: PCT/KR2015/003982
(87) International publication number: WO 2015/163677

(57) **Abstract**

As a communication setting system and method for an Internet of things (IoT) device using a mobile communication terminal, the present invention relates to: a system comprising a mobile communication terminal for outputting a setting information sound wave signal in which access setting information for network access of various IoT devices is synthesized, and an IoT device which receives the setting information sound wave signal outputted from the mobile communication terminal so as to set network access information on the basis of the access setting information; and a method for setting a network access of an IoT device by using a mobile communication terminal. According to the present invention as configured above, it is possible to automatically set a network access of an IoT device by simply using a mobile communication terminal even without physically connecting separate equipment for setting a network access to various IoT devices.

## Description

### [Technical Field]

The present inventive concept relates to a communication setting system and method for an Internet of things (IoT) device using a mobile communication terminal, and more particularly, to a system capable of easily performing communication setting for various IoT devices by transmitting a sound wave signal, which includes communication setting information necessary for network access, using a mobile communication terminal and a method of performing communication setting for network access of IoT devices using the system.

### [Background Art]

With the development of information & communication technology (ICT), the majority of devices available today are getting connected to each other through a communication network. The rapid development of the ICT is giving rise to a society in which all things are connected through mobile and the Internet to communicate with each other, that is, a hyper connected society in which objects and people are connected through a network. In other words, the Internet of things (IoT), a new connected ecosystem having a connection dimension of 'anything' added to a connected world defined by anytime and anyplace, is being built.

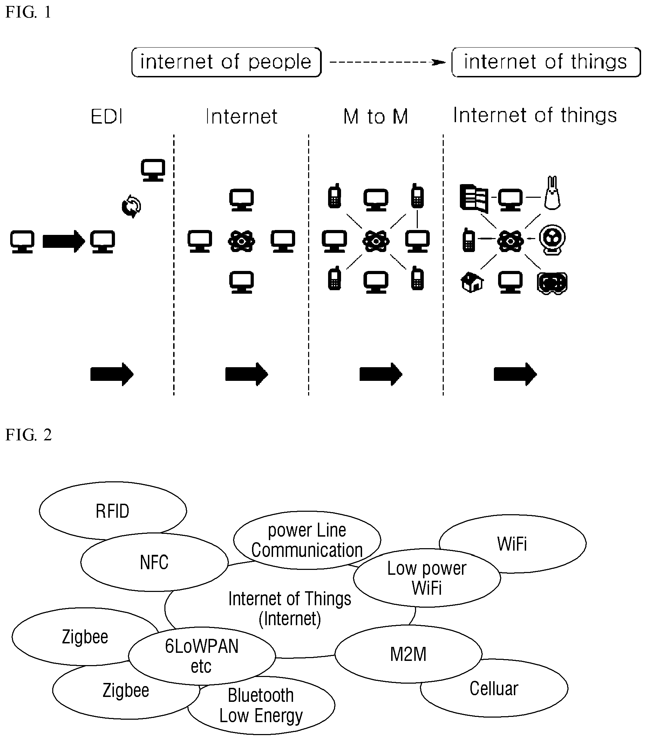

The IoT is an Internet evolved from an existing wired communication-based Internet and a mobile Internet. Referring to the evolution of communication technology illustrated in FIG. 1, in the age of wired communication, data exchange occurred only through connection between objects such as personal computers (PCs). Therefore, the intervention of a person as a medium was necessary. However, the gradual development of wireless communication technology has expanded the communicable range to between people, between people and objects and between objects and has led to the development of machine to machine (M2M) in which autonomous communication is possible between objects.

M2M has made it possible to establish intelligent relationships such as sensing, control, information exchange and processing between major elements and has been changed into the form of service. Further, the concept of M2M has gone beyond wireless communication to be applied to the Internet structure through the IoT. Therefore, the next-generation Internet environment is evolving into interacts with all information in real and virtual worlds.

Along with the evolution into the IoT, various devices are being changed to IoT devices. FIG. 2 illustrates various network access methods which support the IoT. Referring to FIG. 2, IoT devices are connected to each other through various network methods to establish an Internet network.

Here, each of the IoT devices includes a communication medium for access to various networks. To access the networks, it is required to set network access information of the communication medium of each of the IoT devices.

Generally, an IoT device includes an input medium used by a user to set network access information of a communication medium. However, it is not easy for a general user without knowledge about networks to find an optimum network and set a default for the optimum network in person. In particular, if a display for setting network access or a port for connecting an external device is installed in smart devices such as various wearable devices that are small enough to be always unconsciously carried or worn by users, there is a limit to reducing the size of the devices. In addition, it is uncomfortable to wear a wearable device which has function above.

### [Disclosure]

### [Technical Problem]

The inventive concept has been made to solve the foregoing problems of the prior art and therefore an aspect of the inventive concept is to solve the problem of having a limit to a reduction of device size due to the need to install an input medium for setting network access information of a communication medium in general Internet of things (IoT) devices and the problem of discomfort felt when a wearable device is worn.

In particular, it is not easy for a general user without knowledge about networks to find an optimum network, which is to be accessed by an IoT device, and set a default for the optimum network in person. Therefore, an aspect of the inventive concept is to find a solution to this problem.

### [Technical Solution]

According to an aspect of the inventive concept, there is provided a communication setting system for an Internet of things (IoT) device using a mobile communication terminal. The system includes a mobile communication terminal including an IoT communication setting unit which obtains access setting information necessary for access to a network and generates a setting information sound wave signal including the access setting information necessary for network access of an IoT device which is to access the network and a speaker which outputs the setting information sound wave signal generated by the IoT communication setting unit, wherein the IoT device includes a communication medium necessary for access to the network, and network access information of the communication medium of the IoT device is set based on the setting information sound wave signal output from the mobile communication terminal.

The IoT communication setting unit may include: a data conversion unit which converts the access setting information into binary information; a sound source generation unit which generates a sound source; and a sound wave signal generation unit which generates a setting information sound wave signal by synthesizing the binary information with the sound source.

The sound wave signal generation unit may generate the setting information sound wave signal by synthesizing the sound source, the binary information and identification information of the IoT device which is to be access the network.

Alternatively, the identification information may include a pseudo random noise (PN) sequence corresponding to the IoT device, and the sound wave signal generation unit may generate the setting information sound wave signal by synthesizing the sound source, the binary information and the PN sequence.

In addition, the communication setting system for an IoT device using a mobile communication terminal includes an IoT device including a microphone which receives a setting information sound wave signal in which access setting information necessary for access to a network is synthesized with a sound source, a setting information acquisition unit which extracts the access setting information from the setting information sound wave signal, and a communication setting module which sets network access information of a communication medium included in the IoT device for access to the network based on the access setting information so that the IoT device can access the network, wherein the setting information sound wave signal is transmitted from a mobile communication terminal which stores the access setting information for the network that is to be accessed by the IoT device.

The setting information acquisition unit may include: a timing extraction unit which synchronizes the setting information sound wave signal; a sound source generation unit which generates a sound source; a setting information extraction unit which extracts binary information by removing the sound source from the setting information sound wave signal; and a data conversion unit which converts the binary information into the access setting information for the network.

The setting information extraction unit may extract the binary information from the setting information sound wave signal based on identification information of the IoT device.

The identification information may include a PN sequence corresponding to the IoT device, and the setting information extraction unit may extract the binary information by removing the sound source and the PN sequence from the setting information sound wave signal.

Here, the sound source may be ultrasonic waves or a melody.

Further, the IoT device may include an identification information storage unit implemented as radio frequency identification (RFID), near field communication (NFC), quick response (QR) code or barcode which stores the identification information, and the mobile communication terminal may include an identification information recognition unit which recognizes the identification information stored in the RFID, the NFC, the QR code or the barcode.

According to another aspect of the inventive concept, there is provided a communication setting method for an IoT device using a mobile communication terminal. The method includes: generating a setting information sound wave signal by synthesizing access setting information necessary for network access of an IoT device with a sound source and outputting the generated setting information sound wave signal using a mobile communication terminal; receiving the setting information sound wave signal and extracting the access setting information by removing the sound source from the setting information sound wave signal using a communication setting module installed in an IoT device which includes a communication medium for access to a network; and setting network access for the communication medium based on the access setting information using the communication setting module.

The generating of the setting information sound wave signal may include: obtaining access setting information for a network that is to be accessed by the IoT device using the mobile communication terminal; converting the access setting information into binary information using the mobile communication terminal; generating a sound source and generating a setting information sound wave signal by synthesizing the sound source, the binary information and identification information of the IoT device using the mobile communication terminal; and outputting the setting information sound wave signal through a speaker of the mobile communication terminal.

In an embodiment, the generating of the setting information sound wave signal may include: generating a sound source and generating a data sound wave signal by synthesizing the binary information with the sound source; and generating the setting information sound wave signal by synthesizing the identification information with the data sound wave signal.

In an embodiment, the generating of the setting information sound wave signal may include: generating a communication setting signal by synthesizing the identification information with the binary information; and generating a sound source and generating the setting information sound wave signal by synthesizing the communication setting signal with the sound source.

In an embodiment, the generating of the setting information sound wave signal may include: generating a sound source and generating an identification sound wave signal by synthesizing the identification information with the sound source; and generating the setting information sound wave signal by synthesizing the binary information with the identification sound wave signal.

Further, the identification information may include a PN sequence corresponding to the IoT device, and the setting information sound wave signal may be generated by synthesizing the sound source, the binary information and the PN sequence in the generating of the setting information sound wave signal.

Alternatively, the identification information may include a unique key or a serial number of the IoT device and may be included in a header of the setting information sound wave signal in the generating of the setting information sound wave signal.

In addition, the generating of the setting information sound wave signal may further include recognizing identification information stored in an identification information storage unit of the IoT device by using the mobile communication terminal.

Further, the extracting of the access setting information may include: receiving the setting information sound wave signal through a microphone by using the communication setting module installed in the IoT device; generating a sound source and extracting the binary information from the setting information sound wave signal based on the sound source and the identification information by using the communication setting module; and converting the binary information into the access setting information by using the communication setting module.

In an embodiment, the extracting of the binary information may include: generating a sound source, synchronizing the sound source with the setting information sound wave signal, and extracting a communication setting signal by removing the sound source from the setting information sound wave signal; and extracting the binary information from the communication setting signal based on the identification information.

In an embodiment, the extracting of the binary information may include: extracting a data sound wave signal from the setting information sound wave signal based on the identification information; and generating a sound source, synchronizing the sound source with the data sound wave signal, and extracting the binary information by removing the sound source from the data sound wave signal.

In an embodiment, the extracting of the binary information may include: generating a sound source and generating an identification sound wave signal by synthesizing the identification information with the sound source; and synchronizing the identification sound wave signal with the setting information sound wave signal and extracting the binary information from the setting information sound wave signal based on the identification sound wave signal.

Further, the identification information may include a PN sequence corresponding to the IoT device, the setting information sound wave signal including the PN sequence corresponding to the IoT device may be generated in the generating of the setting information sound wave signal, and the binary information may be extracted from the setting information sound wave signal based on the PN sequence in the extracting of the binary information.

Alternatively, the identification information may include a unique key or a serial number of the IoT device, the setting information sound wave signal may be generated by including the identification information in the header in the generating of the setting information sound wave signal, and the binary information may be extracted by recognizing the identification information included in the header of the setting information sound wave signal in the extracting of the binary information.

### [Advantageous Effects]

According to the inventive concept, it is possible to automatically set network access for various Internet of things (IoT) devices using a mobile communication terminal without physically connecting separate equipment for setting network access to the IoT devices.

Further, since network access information for an IoT device is set using a sound wave signal generated by a mobile communication terminal, there are no space constraints. In addition, since identification information of an IoT device is synthesized with a sound wave signal, it is possible to set individual network access information for each of a plurality of IoT devices existing in the same space.

In particular, there is no need to install a display for setting network access or a port for connecting an external device in smart devices such as various wearable devices that are small enough to be always unconsciously carried or worn by users. Therefore, IoT devices can be reduced in size and worn with more comfort.

### [Description of Drawings]

FIG. 1 illustrates the evolution of communication technology into the Internet of things (IoT);
FIG. 2 illustrates various network access methods which support the IoT;
FIG. 3 is a schematic flowchart illustrating a communication setting method for an IoT device using a mobile communication terminal according to the inventive concept;
FIG. 4 illustrates an embodiment of applying the communication setting method for an IoT device using a mobile communication terminal according to the inventive concept;
FIG. 5 illustrates the schematic configuration of a communication setting system for an IoT device using a mobile communication terminal according to an embodiment of the inventive concept;
FIG. 6 illustrates the configuration of a mobile communication terminal according to an embodiment in the communication setting system for an IoT device using a mobile communication terminal according to the inventive concept;
FIG. 7 illustrates the configuration of an IoT communication setting unit according to an embodiment included in a mobile communication terminal in the communication setting system for an IoT device using a mobile communication terminal according to the inventive concept;
FIG. 8 illustrates the configuration of an IoT device according to an embodiment in the communication setting system for an IoT device using a mobile communication terminal according to the inventive concept;
FIG. 9 illustrates the configuration of a communication setting module according to an embodiment installed in an IoT device in the communication setting system for an IoT device using a mobile communication terminal according to the inventive concept;
FIG. 10 illustrates the configuration of a setting information acquisition unit according to an embodiment included in the communication setting module in the communication setting system for an IoT device using a mobile communication terminal according to the inventive concept;
FIG. 11 is a flowchart illustrating a first embodiment of generating a setting information sound wave signal using a mobile communication terminal in the communication setting method for an IoT device using a mobile communication terminal according to the inventive concept;
FIG. 12 illustrates an embodiment of recognizing identification information of an IoT device using a mobile communication terminal;
FIG. 13 illustrates an embodiment of synthesizing data and a pseudo random noise (PN) sequence;
FIG. 14 is a flowchart illustrating a second embodiment of generating a setting information sound wave signal using a mobile communication terminal in the communication setting method for an IoT device using a mobile communication terminal according to the inventive concept;
FIG. 15 is a flowchart illustrating a third embodiment of generating a setting information sound wave signal using a mobile communication terminal in the communication setting method for an loT device using a mobile communication terminal according to the inventive concept;
FIG. 16 is a flowchart illustrating a fourth embodiment of extracting access setting information using an IoT device in the communication setting method for an IoT device using a mobile communication terminal according to the inventive concept;
FIG. 17 illustrates an embodiment of restoring data including a PN sequence;
FIG. 18 is a flowchart illustrating a fifth embodiment of extracting access setting information using an IoT device in the communication setting method for an IoT device using a mobile communication terminal according to the inventive concept; and
FIG. 19 is a flowchart illustrating a sixth embodiment of extracting access setting information using an IoT device in the communication setting method for an IoT device using a mobile communication terminal according to the inventive concept.

### [Best Mode]

The inventive concept suggests a way to output a sound wave signal including access setting information for network access of various Internet of things (loT) devices by using a mobile communication terminal and automatically set network access for the loT devices based on the sound wave signal by using a communication setting module included in each of the loT devices without physically connecting separate equipment for setting network access to the loT devices.

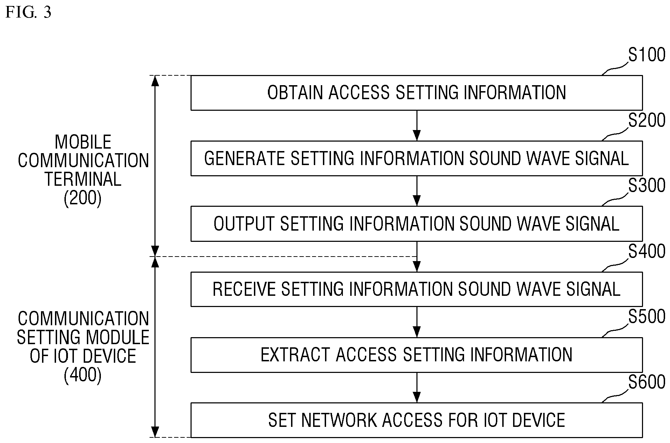

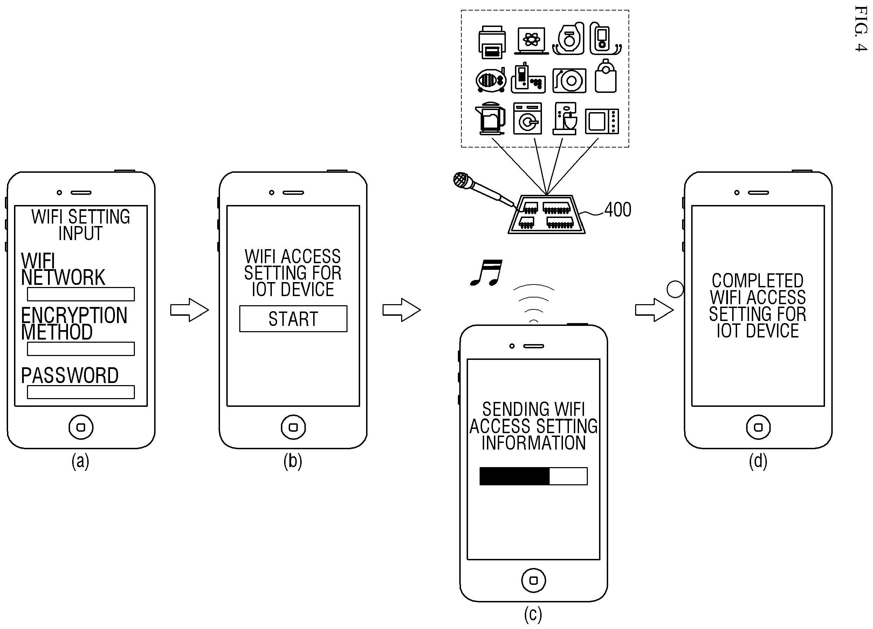

FIG. 3 is a schematic flowchart illustrating a communication setting method for an IoT device using a mobile communication terminal according to the inventive concept. FIG. 4 illustrates an embodiment of applying the communication setting method for an IoT device using a mobile communication terminal according to the inventive concept.

First, a mobile communication terminal 200 obtains access setting information for a network to be accessed by an IoT device 300 (operation S100). Here, the access setting information may be information about one network or a plurality of networks accessible in a certain space. The access setting information may be obtained in advance and stored in the mobile communication terminal 200 or may be obtained at a time when the loT device 300 needs to access the network.

Referring to the embodiment illustrated in (a) of FIG. 4, if the network is a network using WiFi, the access setting information for WiFi may include WiFi network information, information about an encryption method and information about a network access password. The access setting information for other communication methods, for example, for ZigBee may include personal area network (PAN) ID information and channel information and, for Bluetooth, may include personal identification number (PIN) or media access control (MAC) address information. The access setting information may be manually input by a user as illustrated in (a) of FIG. 4 or automatically obtained by the mobile communication terminal 200 through a gateway, a hub or a network management server that connects networks.

In a state where the mobile communication terminal 200 has the access setting information for the network, the mobile communication terminal 200 starts to set network access for the loT device 300 which needs to access the network, as illustrated in (b) of FIG. 4. To this end, the mobile communication terminal 200 generates a setting information sound wave signal by synthesizing the access setting information with a sound source (operation S200). Here, if a plurality of loT devices exists in the same space, the mobile communication terminal 200 may additionally perform a process of recognizing identification information of a particular loT device in order to start network access setting only for the particular loT device.

To set network access for the loT device 300, the mobile communication terminal 200 outputs the generated setting information sound wave signal through a speaker as illustrated in (c) of FIG. 4. Then, a microphone of a communication setting module 400 included in the loT device 300 receives the setting information sound wave signal output through the speaker of the mobile communication terminal 200 (operation S400).

The communication setting module 400 extracts the access setting information from the received setting information sound wave signal (operation S500) and sets access information of a communication medium included in the loT device 300 based on the extracted access setting information in order for network access of the loT device 300 (operation S600).

Once the setting of the network access information for the loT device 300 is completed, the communication setting module of the loT device 300 may send to the mobile communication terminal 200 a signal indicating the completion of the setting of the network access information. Accordingly, information about the completion of the setting of the network access information for the loT device 300 may be displayed on the mobile communication terminal 200 as illustrated in (d) of FIG. 4.

### [Mode for Invention]

The inventive concept, advantages of the inventive concept, and objectives achieved by embodiments of the inventive concept will hereinafter be described by reference to the following detailed description of exemplary embodiments.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises" and/or "has," when used in this specification, specify the presence of stated features, integers, steps, operations, elements, and/or parts, but do not preclude the presence or addition of one or more other features, integers, steps, operations, elements, parts, and/or groups thereof.

A detailed description might be omitted when it is determined that related prior art or the detailed description of the function may unnecessarily obscure the point of the inventive concept.

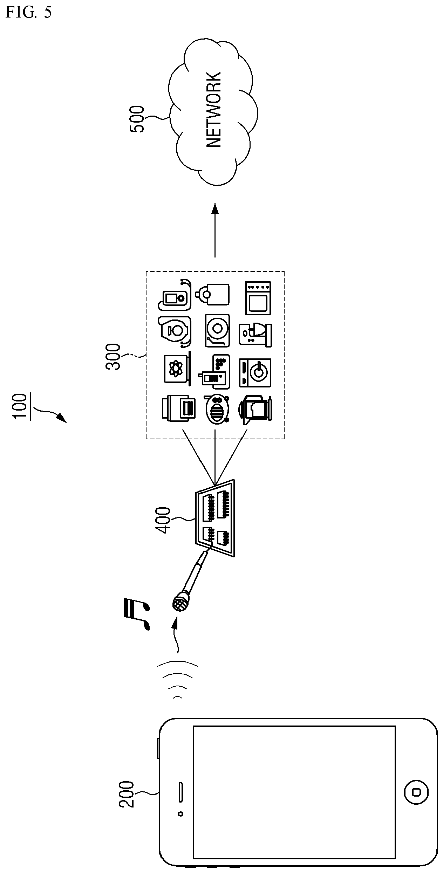

FIG. 5 illustrates the schematic configuration of a communication setting system for an IoT device using a mobile communication terminal according to an embodiment of the inventive concept.

A communication setting system 100 for an IoT device using a mobile communication terminal according to the inventive concept includes a mobile communication terminal 200 which outputs access setting information for a network 500 as a sound wave signal and an IoT device 300 which receives the sound wave signal and accesses the network 500 by setting access information for access to the network 500 based on the sound wave signal.

Here, the network 500 may be limited to a network formed by devices connected to each other in a limited space. However, the network 500 may also include various Internet-accessible networks such as a wide area network (WAN), a local area network (LAN), a PAN, etc. These networks may be networks using WiFi, ZigBee or Bluetooth technology. The loT device 300 is a smart device that supports the loT through these various networks, wherein the loT is a network of objects in which various devices cooperatively establish intelligent relationships such as sensing, networking and information processing with each other without explicit intervention of a person. The loT device 300 may be a home appliance connected to a network to perform its function at home or may be production equipment, an environment controller or office equipment connected to a network to perform its function in a factory or an office. The loT device 300 may also be a portable smart device or a wearable device unconsciously used by humans in their daily lives.

The loT device 300 basically includes a communication medium such as a modem or a communication interface card for access to the network 500. In the inventive concept, the loT device 300 includes a communication setting module 400 which receives a sound wave signal from the mobile communication terminal 200 to set network access for the loT device 300 and automatically sets network access information of the communication medium based on the sound wave signal.

The mobile communication terminal 200 includes elements for generating a sound wave signal and a speaker for outputting the sound wave signal. The mobile communication terminal 200 may be a special terminal used for setting network access information of the loT device 300. However, the mobile communication terminal 200 may also be a general terminal such as a smartphone or a personal digital assistant (PDA).

In the inventive concept, it is possible, for network access of the IoT device 300, to set access information of the loT device 300 using a sound wave signal generated by the mobile communication terminal 200 without physically connecting separate equipment for setting network access directly to the loT device 300. Specific elements for achieving this end will now be described in detail using an embodiment of the mobile communication terminal and an embodiment of the loT device.

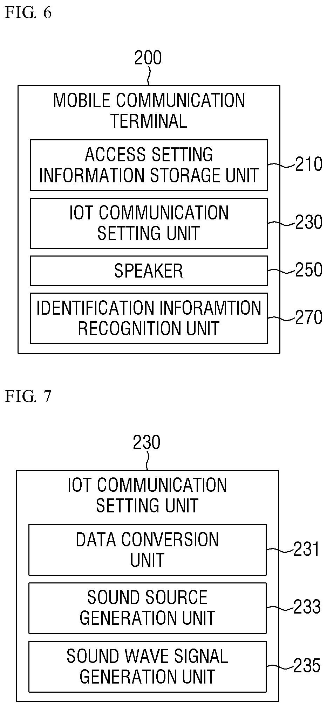

A mobile communication terminal according to an embodiment among the elements of the system according to the inventive concept will first be described. FIG. 6 illustrates the configuration of a mobile communication terminal according to an embodiment in the communication setting system for an IoT device using a mobile communication terminal according to the inventive concept.

A mobile communication terminal 200 basically includes an loT communication setting unit 230 which generates an access setting sound wave signal for access setting of an loT device and a speaker 250 which outputs the access setting sound wave signal and may additionally include an access setting information storage unit 210 which receives and stores network access information and an identification information recognition unit 270 which identifies an loT device.

When the mobile communication terminal 200 is, e.g., a smartphone, the loT communication setting unit 230 may be formed as a type of application installed in the smartphone.

Referring to the configuration of the loT communication setting unit 230 according to an embodiment in FIG. 7, the loT communication setting unit 230 may include a data conversion unit 231, a sound source generation unit 233, and a sound wave signal generation unit 235.

The data conversion unit 231 converts access setting information for a network into data in a form appropriate for generating sound wave signal. To easily generate the access setting information in the sound wave signal, the data conversion unit 231 may convert the access setting information into binary information composed of a sequence of 1 and -1.

The sound source generation unit 233 generates a sound source for carrying the access setting information. Here, the sound source may be generated as ultrasonic waves in a frequency range inaudible to humans, as a simple beep sound, or as a melody to eliminate any uncomfortable feeling when a sound wave signal is output.

The sound wave signal generation unit 235 generates a setting information sound wave signal by synthesizing the binary information received from the data conversion unit 231 with the sound source generated by the sound source generation unit 233.

If one loT device exists in an area that a setting information sound wave signal output from the mobile communication terminal 200 reaches or if the same network access information is set for a plurality of loT devices, the network access information of the loT device or devices may be set using the same setting information sound wave signal without the need to identify the loT device or devices. However, if different network access information needs to be set for each of a plurality of loT devices, the loT devices should be identified. Therefore, it is required to generate a setting information sound wave signal including identification information of each of the loT devices.

To this end, the sound wave signal generation unit 235 may generate the setting information sound wave signal by further including identification information of an loT device 300. Here, the identification information may be a unique key or a serial number given to each of a plurality of loT devices. The sound wave signal generation unit 235 may generate the setting information sound wave signal by including the identification information in a header. The identification information may include a pseudo random noise (PN) sequence corresponding to the IoT device. When using the PN sequence, the sound wave signal generation unit 235 may generate the setting information sound wave signal by multiplying the sound wave by the PN sequence.

Referring back to FIG. 6, the access setting information storage unit 210 of the mobile communication terminal 200 may include an input medium used by a user to input access information for a network or a network setting medium which senses a network signal and automatically sets access information for a network. In addition, the access setting information storage unit 210 may store access setting information for a plurality of networks accessible by various loT devices 300 and, depending on situation, extract access setting information appropriate for a particular loT device among the access setting information for a plurality of networks.

The identification information recognition unit 270 may recognize identification information of an IoT device 300 by recognizing an identification information storage medium included in the loT device 300. To recognize the identification information, various methods such as radio frequency identification (RFID), near field communication (NFC), quick response (QR) code and barcode may be applied. The identification information recognition unit 270 may include various readers for applying these various identification methods.

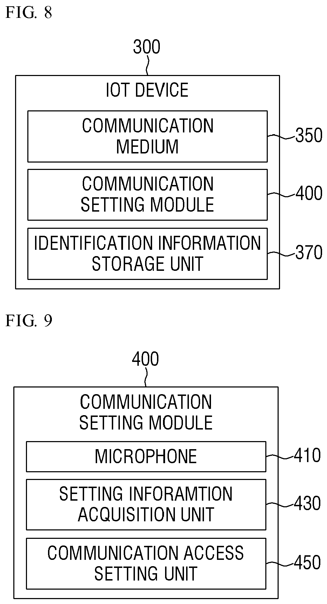

An IoT device according to an embodiment among the elements of the system according to the inventive concept will now be described. FIG. 8 illustrates the configuration of an IoT device according to an embodiment in the communication setting system for an IoT device using a mobile communication terminal according to the inventive concept.

Although not illustrated in FIG. 8, an IoT device 300 basically includes elements for performing its original function. For example, if the loT device is a home appliance such as a television or a refrigerator, it includes elements for performing the original function of the television or the refrigerator. If the loT device is office equipment such as a fax or a copier, it includes elements for performing the original function of the fax or the copier. The loT device 300 includes a communication medium 350 such as a modem or a communication interface to access a network such as the Internet.

The loT device 300 according to the inventive concept includes a communication setting module 400 which sets network access information of the communication medium 350 to access a network.

Additionally, the loT device 300 may include an identification information storage unit 370 which stores identification information of the loT device 300. The identification information storage unit 370 may be implemented as RFID, NFC, QR code or barcode including a unique key or a serial number given to the loT device 300.

The communication setting module 400 receives a setting information sound wave signal from a mobile communication terminal, extracts access setting information from the setting information sound wave signal, and automatically sets network access information of the communication medium 350 based on the extracted access setting information. As an embodiment of the communication setting module 400, FIG. 9 illustrates the configuration of a communication setting module installed in an IoT device in the communication setting system for an IoT device using a mobile communication terminal according to the inventive concept.

A communication setting module 400 may include a microphone 410 which receives a setting information sound wave signal transmitted from a mobile communication terminal, a setting information acquisition unit 430 which extracts access setting information from the received setting information sound wave signal, and a communication access setting unit 450 which sets network access information of the communication medium 350 of an loT device 300 based on the extracted access setting information so that the communication medium 350 of the loT device 300 can access a network.

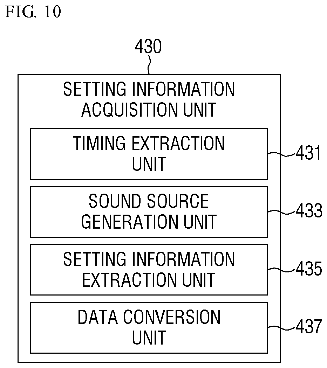

The configuration of the setting information acquisition unit 430 which extracts the access setting information from the received setting information sound wave signal can be found in FIG. 10. Referring to the configuration of the setting information acquisition unit according to an embodiment in FIG. 10, the setting information acquisition unit 430 may include a timing extraction unit 431, a sound source generation unit 433, a setting information extraction unit 435, and a data conversion unit 439.

The timing extraction unit 431 may include, e.g., a clock for synchronization with a received setting information sound wave signal. The sound source generation unit 433 of the communication setting module 400 generates a sound source. The sound source generated by the sound source generation unit 433 of the communication setting module 400 is the same as a sound source used to generate the received setting information sound wave signal.

The setting information extraction unit 435 extracts access setting information by removing the sound source from the received setting information sound wave signal. As described above, the mobile communication terminal 200 converts the access setting information into binary information and synthesizes the binary information with the sound source. Therefore, the setting information extraction unit 435 extracts the binary information, and the extracted binary information is converted into the access setting information by the data conversion unit 439.

In a case where the setting information sound wave signal is transmitted to each of a plurality of loT devices 300, the setting information sound wave signal includes identification information. Therefore, the setting information extraction unit 435 may extract the access setting information from the received setting information sound wave signal based on its identification information. For example, if identification information (such as a unique key or a serial number) of an IoT device is included in a header of the setting information sound wave signal, the setting information extraction unit 435 may recognize the identification information included in the header of the setting information sound wave signal. The identification information may include a PN sequence corresponding to the IoT device. If the PN sequence is included in the received setting information sound wave signal, the setting information extraction unit 435 may extract the access setting information from the setting information sound wave signal by multiplying the sound wave by the PN sequence corresponding to its loT device. That is, if the PN sequence is included in the setting information sound wave signal, the access setting information can be extracted from the setting information sound wave signal using the PN sequence only. Therefore, the access setting information corresponding only to the loT device can be extracted.

In the above-configured communication setting system for an IoT device using a mobile communication terminal according to the inventive concept, it is possible to set network access for an IoT, which requires network access setting, using a sound wave signal generated by a mobile communication terminal without physically connecting separate equipment for setting network access directly to the IoT device.

The inventive concept also suggests a method of setting network access information of an IoT device using the above-described communication setting system for an IoT device using a mobile communication terminal according to the inventive concept. This method has been described above with reference to FIGS. 3 and 4 as an embodiment of the communication setting method for an IoT device using a mobile communication terminal according to the inventive concept.

A specific embodiment of generating a setting information sound wave signal using a mobile communication terminal and a specific embodiment of extracting access setting information using an IoT device in the communication setting method for an IoT device using a mobile communication terminal according to the inventive concept will hereinafter be described.

The following embodiments of the communication setting method for an IoT device using a mobile communication terminal according to the inventive concept use the communication setting system for an IoT device using a mobile communication terminal according to the inventive concept. Therefore, the following embodiments will be described by also referring to the above-described communication setting system for an IoT device using a mobile communication terminal according to the inventive concept. In the following embodiments, a synthesis of a sound source and binary information will be referred to as a data sound wave signal, a synthesis of binary information and identification information will be referred to as a communication setting signal, and a synthesis of a sound source and identification information will be referred to as an identification sound wave signal.

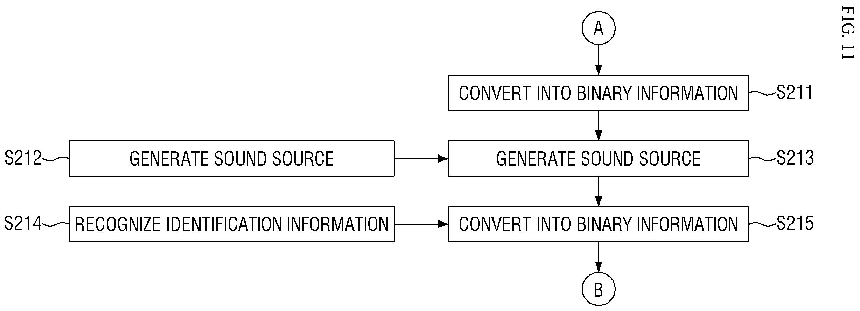

FIG. 11 is a flowchart illustrating a first embodiment of generating a setting information sound wave signal using a mobile communication terminal in the communication setting method for an IoT device using a mobile communication terminal according to the inventive concept. FIG. 11 is an embodiment of the generating of the setting information sound wave signal (operation S200) in the communication setting method for an loT device using a mobile communication terminal according to the inventive concept of FIG. 3.

Referring to the first embodiment of generating a setting information sound wave signal using a mobile communication terminal in FIG. 11, a mobile communication terminal 200 converts access setting information for a network to be accessed by an IoT device 300 into a form appropriate for being synthesized with a sound source, for example, into binary information of 1 and -1 (operation S211).

Then, the mobile communication terminal 200 generates a sound source (operation S212) and synthesizes the binary information with the generated sound source to generate a data sound wave signal (operation S213). Here, the sound source may be generated as ultrasonic waves inaudible to humans or as a beep sound or a melody.

After generating the data sound wave signal by synthesizing the binary information with the generated sound source (operation S150), the mobile communication terminal 200 may immediately output the data sound wave signal through a speaker. However, if a plurality of loT devices exist in the same space, network access for each of the IoT devices should be set using different access setting information. Therefore, the mobile communication terminal 200 may recognize identification information of an loT device that is to access a network (operation S214) and generate a setting information sound wave signal by synthesizing the identification information with the generated data sound wave signal (operation S215).

In the flowchart of FIG. 11, the mobile communication terminal recognizes the identification information of the loT device (operation S214) after generating the data sound wave signal (operation S213). However, this is merely an example, and the recognizing of the identification information of the loT device 30 may be performed at an appropriate time after or before the obtaining of the access setting information (operation S100) in FIG. 3. In view of, e.g., network signal intensity, the mobile communication terminal 200 may select access setting information for a network most suitable for the IoT device 300 to access among a plurality of networks.

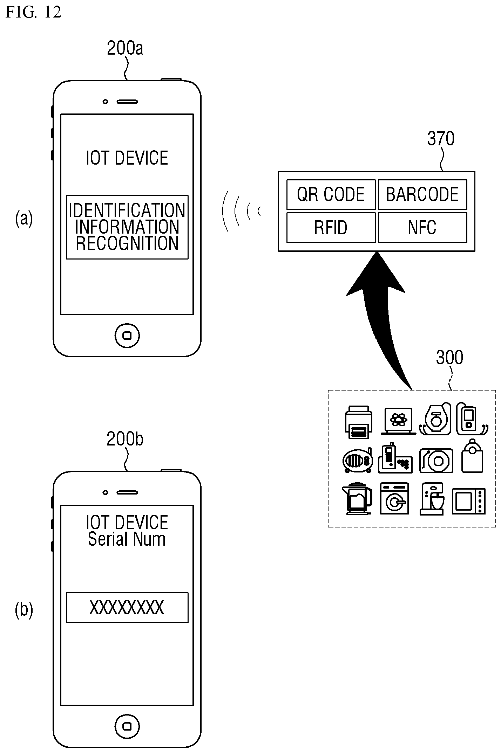

Embodiments in which the mobile communication terminal 200 recognizes identification information of an IoT device 300 are illustrated in FIG. 12. Referring to (a) of FIG. 12, an IoT device 300 may include QR code, barcode, RFID or NFC as an identification information storage unit 370 which stores identification information of the loT device 300. A mobile communication terminal 200a may include a camera which recognizes QR code, a scanner which recognizes barcode, or a reader which recognizes RFID or NFC.

Referring to (b) of FIG. 12, if the loT device 300 does not include the identification information storage unit 370, a user may input a serial number or a unique key of the loT device 300 to a mobile communication terminal 200b so as to identify the loT device 300. Here, the identification information of the loT device may include a PN sequence corresponding to the loT device.

Referring back to FIG. 11, after recognizing the identification information of the loT device 300 that is to access the network, the mobile communication terminal 200 generates a setting information sound wave signal by synthesizing the identification information with the data sound wave signal (operation S215). The mobile communication terminal 200 may generate the setting information sound wave signal by generating the identification information such as a unique key or a serial number of the loT device 300 in a header of the data sound wave signal. Preferably, the mobile communication terminal 200 may generate the setting information sound wave signal by multiplying the data sound wave signal by a PN sequence corresponding to the loT device 300.

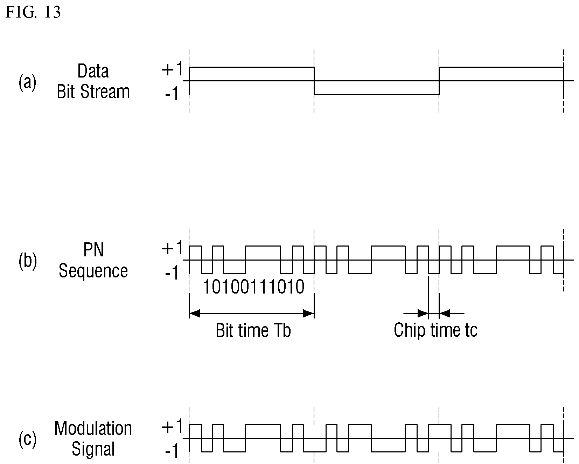

An embodiment of synthesizing a PN sequence is illustrated in FIG. 13. Referring to FIG. 13, a data bit stream in a binary form illustrated in (a) of FIG. 13 is synthesized with a PN sequence illustrated in (b) of FIG. 13. In (a) and (b) of FIG. 13, a PN sequence corresponding to one bit length of the data bit stream is applied. The PN sequence may be synthesized with the data bit stream to generate a modulation signal illustrated in (c) of FIG. 13.

In the inventive concept, a setting information sound wave signal including a PN sequence can be generated by applying the above principle of synthesizing a PN sequence (operation S215).

That is, in the first embodiment of FIG. 11, a data sound wave signal is generated by synthesizing binary information with a sound source, and a setting information sound wave signal is generated by synthesizing identification information with the data sound wave signal.

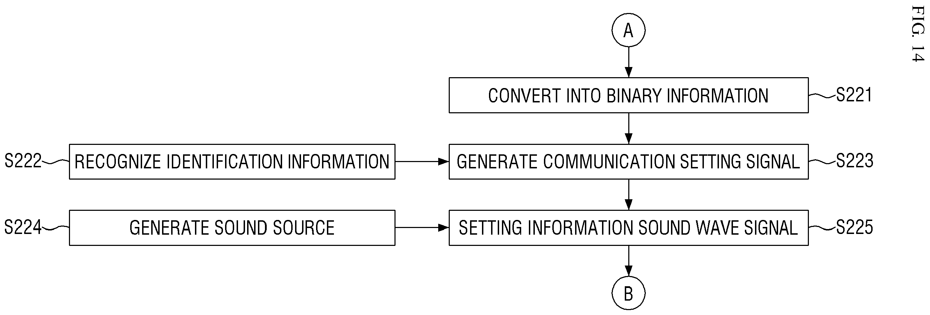

FIG. 14 is a flowchart illustrating a second embodiment of generating a setting information sound wave signal using a mobile communication terminal in the communication setting method for an IoT device using a mobile communication terminal according to the inventive concept.

In the second embodiment of FIG. 14, access setting information is converted into binary information (operation S221), and a communication setting signal is generated by synthesizing the binary information with identification information of an IoT device (operation S223). Since recognizing the identification information of the loT device (operation S222) has been described above with reference to the embodiments of FIGS. 11 and 12, a detailed description thereof is omitted.

If the identification information of the loT device is a unique key or a serial number of the loT device, the communication setting signal may be generated by including the identification information in a header. If the identification information of the loT device includes a PN sequence, the communication setting signal may be generated by synthesizing the binary information and the PN sequence in the same way as in the example described above with reference to FIG. 13.

Then, a sound source is generated (operation S224), and the communication setting signal is synthesized with the sound source to generate a setting information sound wave signal (operation S225).

That is, in the second embodiment of FIG. 14, a communication setting signal is generated by synthesizing identification information with binary information, and a setting information sound wave signal is generated by synthesizing a sound source with the communication setting signal.

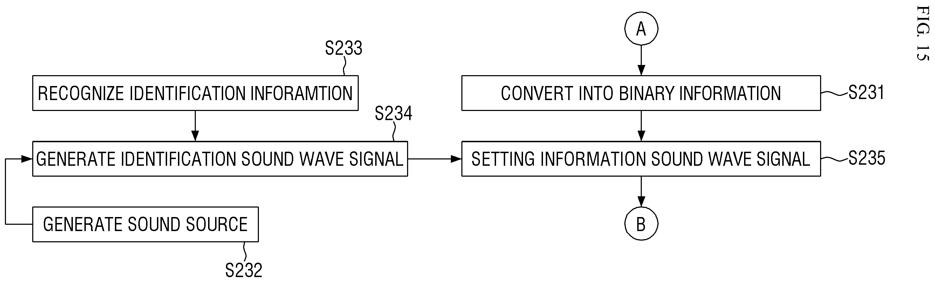

FIG. 15 is a flowchart illustrating a third embodiment of generating a setting information sound wave signal using a mobile communication terminal in the communication setting method for an loT device using a mobile communication terminal according to the inventive concept.

In the third embodiment of FIG. 15, a sound source is generated (operation S232), and an identification sound wave signal is generated by synthesizing identification information with the sound source (operation S234). Here, the identification information may include a unique key or a serial number of an IoT device as described above or include a PN sequence corresponding to the loT device.

Apart from the generating of the identification sound wave signal, access setting information may be converted into binary information (operation S231), and then a setting information sound wave signal may be generated by synthesizing the identification sound wave signal and the binary information.

That is, in the third embodiment of FIG. 15, an identification sound wave signal is generated by synthesizing a sound source and identification information, and a setting information sound wave signal is generated by synthesizing binary information with the identification sound wave signal.

As described above, in the inventive concept, a mobile communication terminal can generate a setting information sound wave signal by synthesizing access setting information with a sound source in various ways.

Specific embodiments of extracting access setting information using an IoT device will now be described.

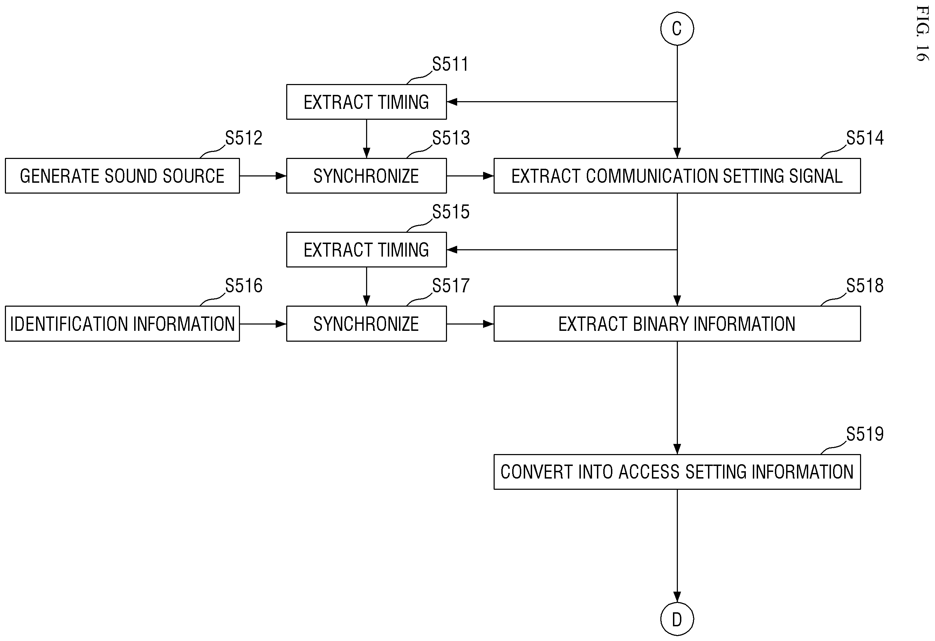

FIG. 16 is a flowchart illustrating a fourth embodiment of extracting access setting information using an IoT device in the communication setting method for an IoT device using a mobile communication terminal according to the inventive concept. FIG. 16 is an embodiment of the extracting of the access setting information (operation S500) in the communication setting method for an IoT device using a mobile communication terminal according to the inventive concept of FIG. 3.

When a communication setting module 400 installed in an IoT device receives a setting information sound wave signal from a mobile communication terminal 200, it extracts a start time of a sound source of the setting information sound wave signal (operation S511), generates a sound source (operation S512), synchronizes the generated sound source with the setting information sound wave signal based on the start timing, and extracts a communication setting signal by removing the sound source from the setting information sound wave signal (operation S514). Here, the sound source generated by the communication setting module 400 should be the same as the sound source included in the setting information sound wave signal. Therefore, the sound source should be preset by the mobile communication terminal 200 and the communication setting module 400.

If the communication setting signal without the sound source does not include identification information of the IoT device, it is binary information about a network. Therefore, the binary information may be converted directly into access setting information.

If the communication setting signal without the sound source includes the identification information, the binary information may be extracted based on the identification information. For example, if the identification information is included in a header of the communication setting signal as a unique key or a serial number of the IoT device according to the second embodiment of FIG. 14, timing of the communication signal may be extracted (operation S515) according to the fourth embodiment of FIG. 16. If the identification information included in the header of the communication setting signal is identical to the identification information of the IoT device, the binary information may be extracted from the communication setting signal (operation S518).

In addition, if the identification information includes a PN sequence corresponding to the IoT device and synthesized according to the first embodiment of FIG. 11, the second embodiment of FIG. 14 and the third embodiment of FIG. 15, the start time of the communication setting signal may be extracted (operation S515) according to the fourth embodiment of FIG. 16, and the binary information may be extracted from the communication setting signal (operation S518) by synchronizing the communication setting signal with the PN sequence of the IoT device (operation S517).

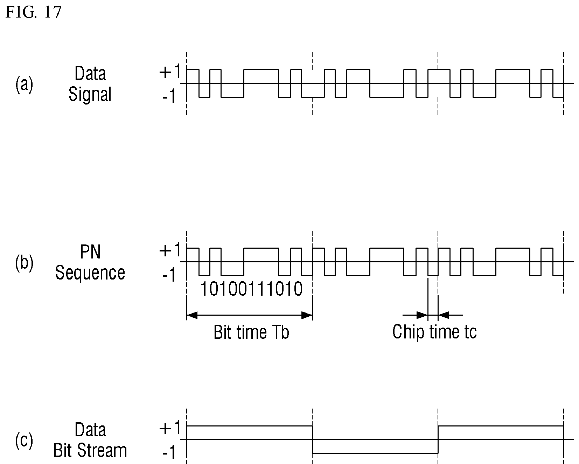

A process of restoring data based on a PN sequence will now be described with reference to an embodiment of restoring data based on a PN sequence illustrated in FIG. 17. FIG. 17 illustrates an embodiment of restoring data in a case where a PN sequence is synthesized according to FIG. 13 described above. In (a) of FIG. 17, a signal including a PN sequence as in (c) of FIG. 13 is illustrated.

Data can be restored only when a PN sequence used to generate a signal including the PN sequence is used. A PN sequence illustrated in (b) of FIG. 17 is identical to the PN sequence illustrated in (b) of FIG. 13. If the PN sequence is synthesized with the signal illustrated in (a) of FIG. 17, a data bit stream in a binary form is restored as illustrated in (c) of FIG. 17.

That is, since the PN sequence is synthesized with the entire signal, data can be restored based on the PN sequence in all of the first embodiment of FIG. 11, the second embodiment of FIG. 14 and the third embodiment of FIG. 15 regardless of when the PN sequence was synthesized. In the inventive concept, binary information can be extracted from a setting information sound wave signal including a PN sequence by applying the method of restoring data based on a PN sequence.

When the binary information is extracted as described above, the communication setting module 400 converts the extracted binary information into access setting information (operation S519).

In the fourth embodiment of FIG. 16, a communication setting signal is extracted by removing a sound source from a received setting information sound wave signal, and binary information is extracted from the communication setting signal based on identification information of an IoT device.

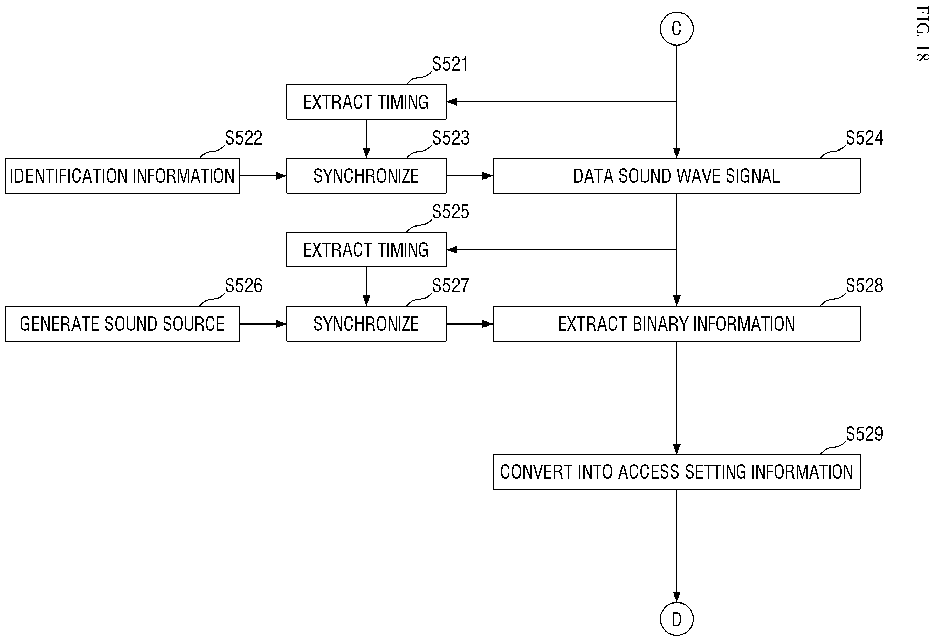

FIG. 18 is a flowchart illustrating a fifth embodiment of extracting access setting information using an IoT device in the communication setting method for an IoT device using a mobile communication terminal according to the inventive concept.

In the fifth embodiment of FIG. 18, a start time of a sound source of a received setting information sound wave signal is extracted (operation S521), and a data sound wave signal is extracted based on identification (operation S524). Here, if the identification information is included in a header of the setting information sound wave signal as a unique key or a serial number of an IoT device according to the first embodiment of FIG. 11, a data sound wave signal may be extracted by recognizing the identification information included in the header of the setting information sound wave signal according to the fifth embodiment of FIG. 18.

Alternatively, if the identification information includes a PN sequence corresponding to the IoT device and synthesized according to the first embodiment of FIG. 11, the second embodiment of FIG. 14 and the third embodiment of FIG. 15, the data sound wave signal may be extracted (operation S524) by synchronizing the setting information sound wave signal with the PN sequence of the IoT device (operation S523) regardless of when the PN sequence was synthesized.

Next, a start time of a sound source of the data sound wave signal is extracted (operation S525), and a sound source is generated (operation S526). Then, the generated sound source is synchronized with the data sound wave signal based on the start timing, and binary information is extracted by removing the sound source from the data sound wave signal (operation S529).

When the binary information is extracted as described above, a communication setting module 400 converts the binary information into access setting information (operation S529).

In the fifth embodiment of FIG. 18, a data sound wave signal is extracted from a received setting information sound wave signal based on identification information, and binary information is extracted by removing a sound source from the data sound wave signal.

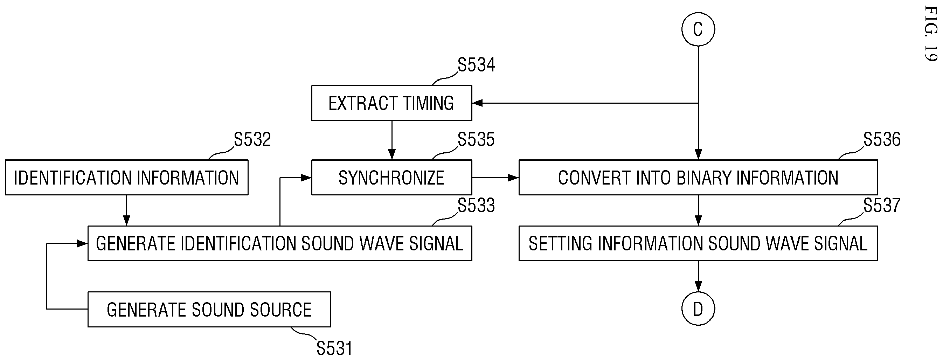

FIG. 19 is a flowchart illustrating a sixth embodiment of extracting access setting information using an IoT device in the communication setting method for an IoT device using a mobile communication terminal according to the inventive concept.

In the sixth embodiment of FIG. 19, a sound source is generated (operation S531), and an identification sound wave signal is generated by synthesizing identification information with the sound source (operation S533).

Then, a start time of a sound source of a received setting information sound wave signal is extracted (operation S534), and binary information is extracted from the setting information sound wave signal by synchronizing the setting information sound wave signal with the identification sound wave signal (operation S535).

If the identification information is included in a header of the identification sound wave signal as a unique key or a serial number of an IoT device according to the third embodiment of FIG. 15, the binary information may be extracted according to the sixth embodiment of FIG. 19. Alternatively, if the identification information includes a PN sequence corresponding to the IoT device and synthesized according to the first embodiment of FIG. 11, the second embodiment of FIG. 14 and the third embodiment of FIG. 15, the identification sound wave signal may be generated by synthesizing the sound source and the PN sequence according to the sixth embodiment of FIG. 19 regardless of when the PN sequence was synthesized, and the binary information may be extracted based on the identification sound wave signal.

Alternatively, the process of generating the identification sound wave signal may not be performed. Instead, an IoT device 400 may have an identification sound wave signal, and a communication setting module 400 may use the identification sound wave signal. If the identification sound wave signal is stored in advance, a mobile communication terminal 200 may generate a setting information sound wave signal based on the pre-stored identification sound wave signal in the third embodiment of FIG. 15. In this case, since the identification sound wave signal of the IoT device 300 is included in the identification information of the IoT device 300, the mobile communication terminal 200 may recognize and use the identification sound wave signal.

When the binary information is extracted as described above, the communication setting module 400 converts the binary information into access setting information (operation S537).

In the sixth embodiment of FIG. 19, an identification sound wave signal in which a sound source and identification information are synthesized is prepared, and binary information is extracted from a received setting information sound wave signal based on the identification sound wave signal.

In the above-described communication setting system and method for an IoT device using a mobile communication terminal according to the inventive concept, it is possible to automatically set network access for various IoT devices without physically connecting separate equipment to the IoT devices.

In particular, there is no need to install a display for setting network access or a port for connecting an external device in smart devices such as various wearable devices that are small enough to be always unconsciously carried or worn by users. Therefore, IoT devices can be reduced in size and worn with more comfort.

While the inventive concept has been particularly shown and described with reference to exemplary embodiments thereof, it will be understood by those of ordinary skill in the art that various changes in form and detail may be made therein without departing from the spirit and scope of the inventive concept as defined by the following claims. The exemplary embodiments should be considered in a descriptive sense only and not for purposes of limitation. The scope of the inventive concept is defined not by the detailed description of the inventive concept but by the following claims, and all technical spirits within the scope will be construed as being included in the inventive concept.

## Claims

1. A mobile communication terminal for communication setting of an Internet of things (IoT) device, the mobile communication terminal comprising:
an IoT communication setting unit which obtains access setting information for a network that can be accessed by an IoT device and generates a setting information sound wave signal including the access setting information so that a communication setting module installed in the IoT device can set network access information of the IoT device; and
a speaker which outputs the setting information sound wave signal generated by the IoT communication setting unit,
wherein the IoT device comprises a communication medium necessary for access to a network, and network access information of the communication medium of the IoT device is set automatically by the communication setting module based on the setting information sound wave signal output from the mobile communication terminal.

2. The mobile communication terminal of claim 1, wherein the IoT communication setting unit comprises:
a data conversion unit which converts the access setting information into binary information;
a sound source generation unit which generates a sound source; and
a sound wave signal generation unit which generates a setting information sound wave signal by synthesizing the binary information with the sound source.

3. The mobile communication terminal of claim 2, wherein the sound wave signal generation unit generates the setting information sound wave signal by synthesizing the sound source, the binary information and identification information of the IoT device which is to access the network.

4. The mobile communication terminal of claim 3, wherein the identification information comprises a pseudo random noise (PN) sequence corresponding to the IoT device, and the sound wave signal generation unit generates the setting information sound wave signal by synthesizing the sound source, the binary information and the PN sequence.

5. The system of claim 2, wherein the sound source is ultrasonic waves.

6. The system of claim 2, wherein the sound source is a melody.

7. The system of claim 3, wherein the IoT device comprises an identification information storage unit implemented as radio frequency identification (RFID), near field communication (NFC), quick response (QR) code or barcode which stores the identification information, and the mobile communication terminal comprises an identification information recognition unit which recognizes the identification information stored in the RFID, the NFC, the QR code or the barcode.

8. A communication setting module for communication setting of an IoT device, the communication setting module being included in an IoT device to automatically set network access for the IoT device which comprises a communication medium necessary for access to a network and comprising a microphone which receives a setting information sound wave signal in which access setting information for a network that can be accessed by the IoT device is synthesized with a sound source, a setting information acquisition unit which extracts the access setting information from the setting information sound wave signal, and a communication access setting unit which sets network access information of the communication medium based on the access setting information so that the IoT device can access the network, wherein the setting information sound wave signal is transmitted from a mobile communication terminal which stores the access setting information for the network that is to be accessed by the IoT device.

9. The communication setting module of claim 8, wherein the setting information acquisition unit comprises:
a timing extraction unit which synchronizes the setting information sound wave signal;
a sound source generation unit which generates a sound source;
a setting information extraction unit which extracts binary information by removing the sound source from the setting information sound wave signal; and
a data conversion unit which converts the binary information into the access setting information for the network.

10. The communication setting module of claim 9, wherein the setting information extraction unit extracts the binary information from the setting information sound wave signal based on identification information of the IoT device.

11. The communication setting module of claim 10, wherein the identification information comprises a PN sequence corresponding to the IoT device, and the setting information extraction unit extracts the binary information by removing the sound source and the PN sequence from the setting information sound wave signal.

12. The system of claim 9, wherein the sound source is ultrasonic waves.

13. The system of claim 9, wherein the sound source is a melody.

14. The system of claim 10, wherein the IoT device comprises an identification information storage unit implemented as RFID, NFC, QR code or barcode which stores the identification information, and the mobile communication terminal comprises an identification information recognition unit which recognizes the identification information stored in the RFID, the NFC, the QR code or the barcode.

15. A communication setting method for an IoT device using a mobile communication terminal, the method comprising:
obtaining access setting information for a network that can be accessed by an IoT device, generating a setting information sound wave signal by synthesizing the access setting information necessary for network access of the IoT device with a sound source, and outputting the generated setting information sound wave signal by using a mobile communication terminal;
receiving the setting information sound wave signal and extracting the access setting information by removing the sound source from the setting information sound wave signal by using a communication setting module installed in the IoT device having a communication medium necessary for access to a network; and
automatically setting network access information of the communication medium for network access of the IoT device based on the access setting information by using the communication setting module.

16. The method of claim 15, wherein the generating of the setting information sound wave signal comprises:
obtaining access setting information for a network that is to be accessed by the IoT device using the mobile communication terminal;
converting the access setting information into binary information using the mobile communication terminal;
generating a sound source and generating a setting information sound wave signal by synthesizing the sound source, the binary information and identification information of the IoT device using the mobile communication terminal; and
outputting the setting information sound wave signal through a speaker of the mobile communication terminal.

17. The method of claim 16, wherein the generating of the setting information sound wave signal comprises:
generating a sound source and generating a data sound wave signal by synthesizing the binary information with the sound source; and
generating the setting information sound wave signal by synthesizing the identification information with the data sound wave signal.

18. The method of claim 16, wherein the generating of the setting information sound wave signal comprises:
generating a communication setting signal by synthesizing the identification information with the binary information; and
generating a sound source and generating the setting information sound wave signal by synthesizing the communication setting signal with the sound source.

19. The method of claim 16, wherein the generating of the setting information sound wave signal comprises:
generating a sound source and generating an identification sound wave signal by synthesizing the identification information with the sound source; and
generating the setting information sound wave signal by synthesizing the binary information with the identification sound wave signal.

20. The method of claim 16, wherein the identification information comprises a PN sequence corresponding to the IoT device, and the setting information sound wave signal is generated by synthesizing the sound source, the binary information and the PN sequence in the generating of the setting information sound wave signal.

21. The method of claim 16, wherein the identification information comprises a unique key or a serial number of the IoT device and is included in a header of the setting information sound wave signal in the generating of the setting information sound wave signal.

22. The method of claim 16, wherein the generating of the setting information sound wave signal further comprises recognizing identification information stored in an identification information storage unit of the IoT device by using the mobile communication terminal.

23. The method of claim 16, wherein the extracting of the access setting information comprises:
receiving the setting information sound wave signal through a microphone by using the communication setting module installed in the IoT device;
generating a sound source and extracting the binary information from the setting information sound wave signal based on the sound source and the identification information by using the communication setting module; and
converting the binary information into the access setting information by using the communication setting module.

24. The method of claim 23, wherein the extracting of the binary information comprises:
generating a sound source, synchronizing the sound source with the setting information sound wave signal, and extracting a communication setting signal by removing the sound source from the setting information sound wave signal; and
extracting the binary information from the communication setting signal based on the identification information.

25. The method of claim 23, wherein the extracting of the binary information comprises:
extracting a data sound wave signal from the setting information sound wave signal based on the identification information; and
generating a sound source, synchronizing the sound source with the data sound wave signal, and extracting the binary information by removing the sound source from the data sound wave signal.

26. The method of claim 23, wherein the extracting of the binary information comprises:
generating a sound source and generating an identification sound wave signal by synthesizing the identification information with the sound source; and
synchronizing the identification sound wave signal with the setting information sound wave signal and extracting the binary information from the setting information sound wave signal based on the identification sound wave signal.

27. The method of claim 24, wherein the identification information comprises a PN sequence corresponding to the IoT device, the setting information sound wave signal comprising the PN sequence corresponding to the IoT device is generated in the generating of the setting information sound wave signal, and the binary information is extracted from the setting information sound wave signal based on the PN sequence in the extracting of the binary information.

28. The method of claim 24, wherein the identification information comprises a unique key or a serial number of the IoT device, the setting information sound wave signal is generated by including the identification information in the header in the generating of the setting information sound wave signal, and the binary information is extracted by recognizing the identification information included in the header of the setting information sound wave signal in the extracting of the binary information.
